(19) Europäisches Patentamt

European Patent Office

Office européen des brevets

(11) **EP 0 750 179 B1**

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(51) Int Cl.[7]: **G01D 5/36**

(21) Anmeldenummer: **95109701.3**

(22) Anmeldetag: **22.06.1995**

(54) **Positionsmesseinrichtung**

Position measuring device

Dispositif pour mesurer une position

(84) Benannte Vertragsstaaten:
**DE FR GB IT**

(43) Veröffentlichungstag der Anmeldung:
**27.12.1996 Patentblatt 1996/52**

(73) Patentinhaber: **Dr. Johannes Heidenhain GmbH
83292 Traunreut (DE)**

(72) Erfinder:
- **Thaler, Josef
  D-83301 Tranreut (DE)**
- **Meyer, Hermann, Dipl.-Ing.
  D-83458 Weissbach (DE)**

(56) Entgegenhaltungen:
| | |
|---|---|
| EP-A- 0 106 951 | EP-A- 0 541 829 |
| DE-A- 3 616 144 | DE-C- 3 412 128 |
| GB-A- 1 014 405 | US-A- 3 674 372 |

**Beschreibung**

Die Erfindung bezieht sich auf eine Vorrichtung gemäß dem Oberbegriff des Anspruches 1.

Derartige Vorrichtungen werden zur Messung von Lageänderungen zweier relativ zueinander beweglicher Objekte benötigt. Dabei werden die unterschiedlichsten physikalischen Abtastprinzipien benutzt. Man unterscheidet zwischen photoelektrischer, magnetischer, induktiver und kapazitiver Abtastung.

Das Grundprinzip ist jedoch allen Methoden gemeinsam: Eine periodische Meßteilung wird abgetastet und das so erzeugte Abtastsignal wird als Meßsignal ausgewertet.

Die Periode der gewonnenen Abtastsignale wird durch die Teilungsperiode oder das Inkrement der Meßteilung des Teilungsträgers bestimmt. Das Inkrement wird bei photoelektrischen Meßeinrichtungen durch die Breiten eines lichtdurchlässigen Streifens und die Breiten eines lichtundurchlässigen Streifens in Meßrichtung gebildet. Bei der Relativbewegung zwischen der Abtasteinheit und der Meßteilung des Teilungsträgers wird von jedem abgetasteten Inkrement ein Zählimpuls abgeleitet, vorzeichenrichtig aufsummiert und die Summe steht als Meßwert zur Verfügung.

Die aus den Meßteilungen der Teilungsträger bei photoelektrischen, magnetischen, induktiven und kapazitiven Meßeinrichtungen gewonnenen periodischen Analogsignale weisen im allgemeinen keinen reinen sinusförmigen Verlauf auf, sondern sind beispielsweise infolge von Ungenauigkeiten der Meßteilungen oberwellenbehaftet. Diese Ungenauigkeiten der Meßteilungen werden zum Beispiel durch unterschiedliche Abstände der lichtdurchlässigen und lichtundurchlässigen Streifen oder durch eine Kantenunschärfe dieser Streifen hervorgerufen. Um die gewonnenen Analogsignale weitgehend oberwellenfrei zu halten, müssen hohe Anforderungen an die Genauigkeit der Meßteilungen gestellt werden. Zur Bildung von genauen Positionsmeßwerten für jede Teilungsperiode und um zur weiteren Erhöhung der Auflösung die Teilungsperioden der Meßteilung durch Bildung von Interpolationswerten exakt unterteilen zu können, muß das aus dieser Meßteilung gewonnene Analogsignal oberwellenfrei sein, also beispielsweise möglichst sinusförmig.

Die DE-A-3 305 921 zeigt spezielle optische Mittel auf (Seite 1, Zeilen 19-30), mit denen die Harmonischen (=Oberwellen) minimiert werden können.

Die GB-A-1 227 942 weist auf Seite 2, Zeilen 52-55 daraufhin, daß es mittels zusätzlicher Aperturen und unterschiedlicher gegenseitiger Abstände möglich ist, auch den Effekt von Harmonischen höherer Ordnung zu tilgen. In den vorangehenden Zeilen ist dort auf die Verringerung von Oberwellen hingewiesen (Seite 2, Zeilen 29-51).

In der EP-A-0 235 750 ist die Beseitigung von Anteilen der Oberwellen dritter Ordnung beschrieben (abstact).

In der EP-A-0 250 711 ist beschrieben, daß Abtastsignale erzeugt werden, die bis zu einer vorbestimmten Bandbreite oberwellenfrei sind. Dazu sind Teilfelder hinsichtlich ihrer Breiten und Formen sowie im gegenseitigen Lagebezug zueinander ausgewählt und über mehrere Teilungsperioden der Meßteilung verteilt um Moiré-Streifen abzutasten.

Zur Gewinnung oberwellenfreier periodischer Signale wird in der DE-32 39 108-C2 vorgeschlagen, die Bandbreite (Anzahl der Frequenzen oder Wellen) des Analogsignals zu ermitteln, die Teilungsperiode der Meßteilung jeweils mit Abtastelementen abzutasten, die von den Abtastelementen gelieferten periodischen Analogsignale zur Ermittlung von Fourierkoeffizienten der Grundwelle des Analogsignals einer Fourieranalyse zu unterziehen und die Fourierkoeffizienten als oberwellenfreie periodische Signale zur Bildung von Positionsmeßwerten auszuwerten.

Ein mathematisch äquivalenter, aber ausführungsmäßig völlig anderer Ansatz zur Oberwellenfilterung ist aus der DE-34 12 128 C1 als sogenannte arcsin-Abtastung bekannt. Nach einem 1. Gitter entsteht eine Intensitätsverteilung (Gitterbild im Schattenwurf oder Selbstabbildung in der Talbot-Ebene) die mit einem Gitter variabler Teilung abgetastet wird. Nachteilig ist hierbei, daß die ideale Verteilung der arcsin-Abtastteilung je nach Gesamtzahl der Linien, d.h. je nach Breite des Abtastfensters verschieden ist.

Aus der DE-PS 19 41 731 ist eine photoelektrische Längenmeßeinrichtung bekannt, bei der zur Gewinnung eines oberwellenfreien Analogsignals bei der Abtastung der Meßteilung eines Teilungsträgers eine Frequenzfilterblende mit einem sinusförmigen Durchlässigkeitsverlauf vorgesehen ist. Bei dieser Meßeinrichtung muß eine spezielle Frequenzfilterblende hergestellt und eingebaut werden. Zudem ist diese Meßeinrichtung auf das photoelektrische Durchlichtmeßprinzip beschränkt, bei dem ein aus periodischen Helligkeitsschwankungen aufgebautes Streifensystem - wie gemäß EP-A-0 250 711 - erzeugt wird. Je eine Frequenzfilterblende wird in Moire-Streifensysteme eingebracht; die Frequenzfilterblenden können auch direkt auf die Abtastgitter aufgebracht sein.

Der Erfindung liegt die Aufgabe zugrunde, eine Vorrichtung zur Gewinnung oberwellenfreier periodischer Signale anzugeben, die zu diesem Zweck keiner zusätzlichen Elemente bedarf, universell einsetzbar ist, die gesamte Abtastfläche ausnutzt und große Justiertoleranzen zuläßt.

Diese Aufgabe wird erfindungsgemäß durch die Merkmale des Anspruches 1 gelöst.

Die mit der Erfindung erzielten Vorteile bestehen insbesondere darin, daß auf einfache Weise die Gewinnung oberwellenfreier periodischer Signale lediglich mit abgewandelten herkömmlichen Mitteln bekannter Positionsmeßeinrichtungen ermöglicht wird, ohne daß zusätzliche Elemente wie Frequenzfilterblenden erforderlich sind, ohne daß besondere Anforderungen an die Genauigkeit der Teilung gestellt werden müssen, wobei die Vorrichtung einen hohen Wirkungsgrad hat.

Vorteilhafte Weiterbildungen der Erfindung entnimmt man den abhängigen Ansprüchen.

Ausführungsbeispiele der Erfindung werden anhand der Zeichnung näher erläutert.

Es zeigt

Figur 1     eine Längenmeßeinrichtung im Querschnitt;

Figur 2     schematisch eine Abtasteinheit einer photoelektrischen Längenmeßeinrichtung;

Figur 3     eine Anordnung von Maßstab und Abtastelement und

Figur 4     ein Abtastelement mit Abtastsignal.

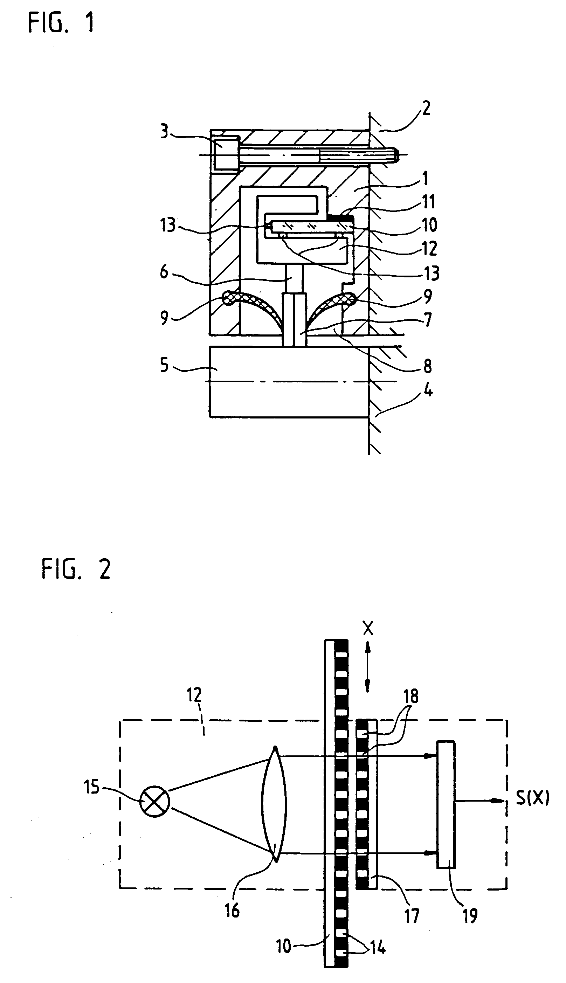

In Figur 1 ist eine Längenmeßeinrichtung im Querschnitt dargestellt, deren Gehäuse 1 in Form eines Hohlprofils an einem Bett 2 einer nicht dargestellten Bearbeitungsmaschine mittels einer Schraubverbindung 3 befestigt ist. An einem Schlitten 4 der Bearbeitungsmaschine ist ein Montagefuß 5 mit einem Mitnehmer 6 in beliebiger Weise befestigt, der über eine schneidenförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt; die Relativbewegung des Schlittens 4 bezüglich des Betts 2 wird vom Mitnehmer 6 auf die Abtasteinheit 12 übertragen.

Gemäß Figur 2 sind zur Abtastung einer Meßteilung 14 des Maßstabs 10 in der Abtasteinheit 12 eine Lichtquelle 15, ein Kondensor 16, eine Abtastplatte 17 mit einer Teilung 18 und ein Photoelement 19 angeordnet. Der von der Lichtquelle 15 ausgehende Lichtstrom wird vom Kondensor 16 parallel gerichtet, durchsetzt die Teilungen 14, 18 des Maßstabs 10 und der Abtastplatte 17 und fällt anschließend auf das Photoelement 19. Bei der Relativbewegung der Abtasteinheit 12 mit der Abtastplatte 17 in Meßrichtung X gegenüber dem Maßstab 10 wird der Lichtstrom an den Teilungen 14, 18 moduliert, so daß das Photoelement 19 ein periodisches elektrisches Analogsignal S (X) liefert, das ausgewertet, gezählt und in digitaler Form als Positionsmeßwert zur Anzeige gebracht wird.

Das vom Photoelement 19 gelieferte periodische Analogsignal S (X) ist im allgemeinen z.B. aufgrund von Ungenauigkeiten der Teilungen 14, 18 oberwellenbehaftet und kann als Funktion des Meßweges X durch eine Fourierreihe dargestellt werden.

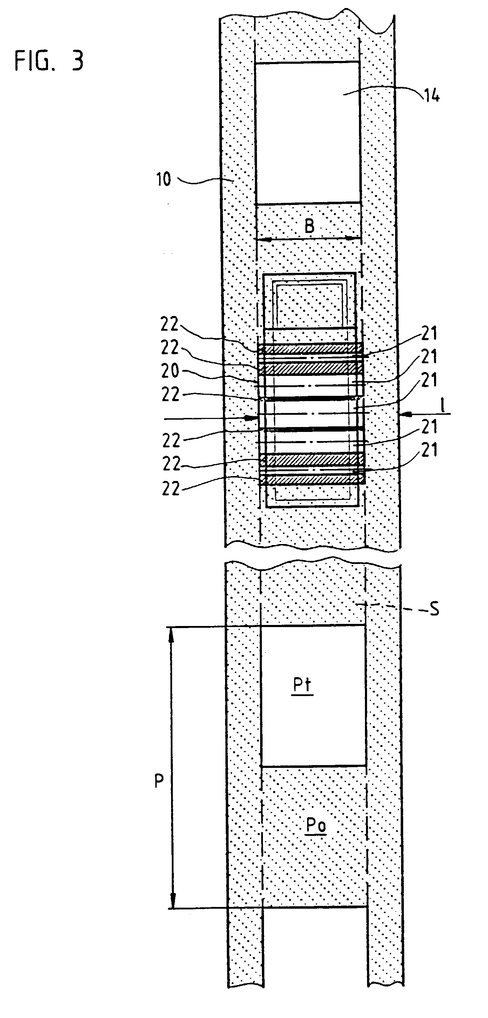

Der in Figur 3 vergrößert dargestellte Maßstab 10 weist die Meßteilung 14 mit einer Teilungsperiode P auf, die zur Hälfte aus einem transparenten Bereich $P_t$ und einem opaken Bereich $P_o$ besteht. Von der Abtasteinheit 12 ist hier zur Abtastung der Meßteilung 14 nur ein Abtastelement 20 dargestellt. Dieses Abtastelement 20 steht für die Abtastplatte 17 und das Photoelement 19 aus Figur 2. Das Abtastelement 20 kann aus einem Element gemäß der Abtastplatte 17 mit der Teilung 18 und dem Photoelement 19 bestehen, aber es kann auch durch ein Element wie etwa dem Photoelement 19 bestehen, welchem die Abtastteilung 18 direkt aufgeprägt ist. Da diese Bauform beliebig ist, wird es allgemein als Abtastelement 20 bezeichnet. Das Abtastelement 20 hat in Meßrichtung X die Länge einer halben Teilungsperiode P der Meßteilung 14. Es können mehrere Abtastelemente 20 mit gleichen Eigenschaften in Meßrichtung X hintereinander angeordnet sein.

Das Abtastelement 20 besteht seinerseits aus Teilelementen 21, die transparent sind und durch opake Bereiche 22 voneinander getrennt sind. Die Anzahl N der transparenten Teilelemente 21 richtet sich nach der gewünschten Qualität an die Sinusförmigkeit des Signals, d.h. also an die geforderte Oberwellenfreiheit bzw. deren Bandbreite. Praktisch bedeutet dies, daß ein direkter Zusammenhang zwischen der Ordnungszahl der auszufilternden Oberwellen, somit der Sinusförmigkeit des Signals und der Anzahl N der transparenten Teilelemente 21 besteht.

Die Breite $b_i$ (i=1 bis N) der transparenten Teilelemente 21 variiert abhängig von ihrer Lage innerhalb der Teilungsperiode P nach einer Sinus- oder Cosinusfunktion.

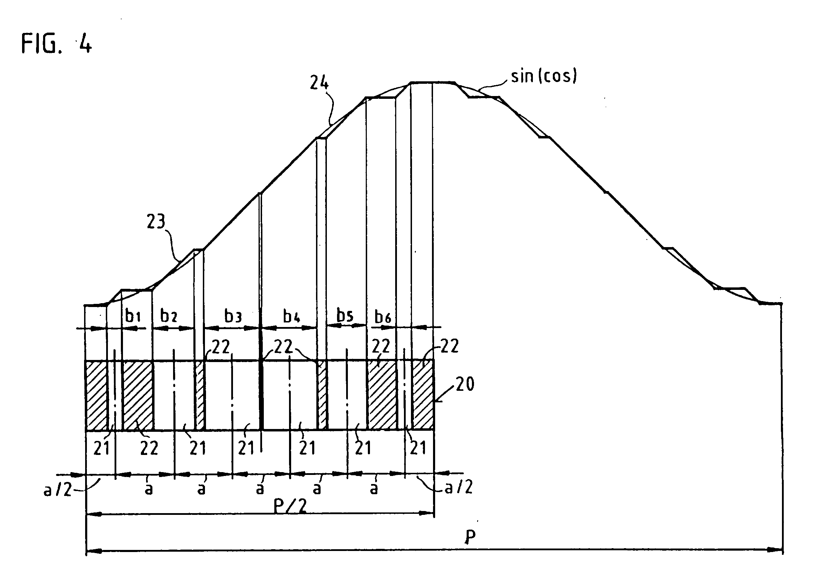

Dies wird aus Figur 4 deutlich, in der ein Abtastelement 20 vergrößert dargestellt ist und über dem das durch das Abtastelement 20 gewonnene Signal 23 und dessen Einhüllende 24 aufgetragen ist.

Die Mitten der Teilelemente 21 weisen zueinander den gleichen Abstand a auf, was durch eine Art Bemaßungspfeile a deutlich gemacht wird.

Wie aus dieser Darstellung ersichtlich ist, ist die Breite $b_i$ (i=1 bis N) der Teilelemente 21 unterschiedlich, und zwar variiert sie nach einer Sinusoder Cosinusfunktion in Abhängigkeit von der Lage des einzelnen Teilelements 21 innerhalb der Teilungsperiode P.

Die Teilelemente 21 müssen nicht äquidistant angeordnet sein, sondern ihre gegenseitigen Abstände können sich auch unterscheiden, aber der gleichmäßige Abstand a ist bevorzugt. Auf die Zusammenhänge zwischen der Breite bi der Teilelemnte 21 und ihrer Lage innerhalb einer Teilungsperiode wird später noch zurückgekommen.

Um möglichst viel Energie auf das Detektorelement (Photoelement) zu bekommen, sind die Teilelemente 21 rechteckförmig und quer zur Meßrichtung X wenigstens so lang, daß sie der Breite B der Meßteilung 14 entsprechen. Beim Stand der Technik, der von Blenden oder dergleichen Gebrauch macht, sind immer Verluste bezüglich der Lichtausbeute zu verzeichnen. Da bei der Erfindung immer die gesamte Breite der Meßteilung 14 von den Teilungselementen 21 abgetastet wird, ist diesbezüglich immer die maximale Lichtausbeute möglich.

Dies ist besonders vorteilhaft bei Meßeinrichtungen, deren Meßteilung 14 eine Teilungsperiode P aufweist, die in der Größenordnung der Empfängerfläche des lichtempfindlichen Elements liegt. Bei einem Elementarray typischer Weise 0,2x0,3 mm.

Die Verteilung der Teilelemente 21 unterliegt folgenden mathematischen Gesetzmäßigkeiten:

$$(1) \qquad a = \frac{P}{2*N}$$

$$(2) \qquad b_i = a*\sin\left(i*\frac{180°}{N} - \frac{90°}{N}\right)$$

dabei ist

P     die Teilungsperiode
N     die Anzahl der Teilelemente
a     der gegenseitige Mittenabstand der Teilelemente
b     die Breite der Teilelemente
$b_i$     die lokale Breite der Teilelemente wobei i=1 bis N

Es liegt im Rahmen der Erfindung auch mehrere Abtastelemente in Meßrichtung X hintereinander vorzusehen. Das Abtastsignal entspricht dann der Summe der Teilabtastsignale.

Wenn der gegenseitige Abstand der Teilelemente nicht äquidistant ist, kann die Filterung beliebiger Oberwellen und sogar der Subharmonischen durch eine spezielle Verteilung der Teilelemente innerhalb einer Teilungsperiode erfolgen.

Die durch die Abtastteilung zu erzielenden Filterwirkung für die Abtastsignale wird durch eine bestimmte Transmissionsfunktion charakterisiert, die durch die auszufilternden Oberwellen bestimmt wird. Die Oberwellen werden dann unterdrückt, wenn ihre zugehörigen Fourierkoeffizienten unterdrückt, bzw. minimiert werden. Um diese Wirkung zu erzielen, müssen die Breiten der Teilelemente 21 und ihre Lage innerhalb einer Teilungsperiode nach Regeln aufeinander abgestimmt werden, die diesen Effekt ermöglichen. Die Einhüllende 24 in Figur 4 ist ein Sinus, dies ist in diesem Fall die Kurve der gewünschten Filterwirkung. Um sich dieser Kurve möglichst genau anzunähern, sind die Breiten und die Lage der Teilelemente 21 in der beschriebenen Weise aufeinander abgestimmt

**Patentansprüche**

1. Vorrichtung zur Gewinnung von Signalen durch Abtastung einer periodischen Meßteilung (14) mit einer Abtastteilung (18), welche eine Transmissionsfunktion aufweist, aufgrund der eine Filterwirkung für die Abtastsignale resultiert, die durch die zu unterdrückenden Oberwellen bestimmt ist, wobei die Vorrichtung folgende Merkmale umfaßt:

-    eine Lichtquelle (15);
-    einen Maßstab (10) mit einer Meßteilung (14), die eine bestimmte Teilungsperiode (P) aufweist;
-    mindestens ein Abtastelement (20) zur Abtastung einer Teilungsperiode (P) der Meßteilung, das zumindest eine Spur aus mehreren rechteckförmigen Teilelementen (21) aufweist, die transparent sind und durch opake Bereiche voneinander getrennt sind;
-    ein Photoelement (19),

dadurch gekennzeichnet,

daß das Abtastelement (20) innerhalb einer Teilungsperiode (P) der Meßteilung (14) mehrere solche rechteckförmige Teilelemente (21) aufweist,

wobei die Mitten der transparenten Teilelemente (21) in Meßrichtung (X) innerhalb einer Teilungsperiode (P) der Meßteilung (14) jeweils einen bestimmten Abstand (a) haben, und

wobei die transparenten Teilelemente jeweils eine definierte Breite ($b_i$) aufweisen, die abhängig von der Lage des jeweiligen transparenten Teilelements (21) innerhalb der genannten Teilungsperiode (P) variiert, so daß die zu den zu unterdrückenden Oberwellen gehörenden Fourierkoeffizienten der Transmissionsfunktion minimiert werden.

2. Vorrichtung nach Anspruch 1, dadurch gekennzeichnet, daß Teilelemente (21) in Meßrichtung (X) innerhalb einer Teilungsperiode (P) äquidistant zueinander versetzt sind, wobei ihre wirksame Breite bj, i=1 bis N, einem Bruchteil einer Teilungsperiode (P) entspricht und sich in Abhängigkeit von ihrer Lage innerhalb der Teilungsperiode (P) nach einer Sinus- oder Cosinusfunktion bestimmt.

3. Vorrichtung nach Anspruch 1, dadurch gekennzeichnet, daß die Länge (l) der Teilelemente (21) quer zur Meßrichtung (X) wenigstens der Breite (B) einer Spur (S) der Meßteilung (14) entspricht.

4. Vorrichtung nach Anspruch 1, dadurch gekennzeichnet, daß die Mitten der Teilelemente (21) zueinander den gleichen Abstand (a) aufweisen.

5. Vorrichtung nach Anspruch 1, dadurch gekennzeichnet, daß mehrere Abtastelemente (20) in Meßrichtung (x) hintereinander angeordnet sind.

6. Vorrichtung nach Anspruch 1, dadurch gekennzeichnet, daß die Verteilung der Breiten ($b_i$) der Teilelemente (21) gemäß der Beziehung

$$b_i = a * \sin (i * (180°/N) - (90°/N))$$

gewählt ist, mit

$$a = (P/(2 * N))$$

und wobei

P    die Teilungsperiode,
N    die Anzahl der Teilelemente,
a    den gegenseitigen Mittenabstand der Teilelemente,
b    die Breite der Teilelemente und
$b_i$    die lokale Breite der Teilelemente mit i=1 bis N angibt.

**Claims**

1. Device for obtaining signals by scanning a periodic measurement division (14) with a scanning division (18) which has a transmission function, on the basis of which a filter effect for the scanning signals results, which is determined by the harmonics to be suppressed, the device comprising the following features:

-    a light source (15);
-    a scale (10) with a measurement division (14) which has a specific division period (P);
-    at least one scanning element (20) to scan a division period (P) of the measurement division and which has at least one track made up of a plurality of rectangular division elements (21) which are transparent and are separated from one another by opaque regions;
-    a photocell (19),

**characterised in that**

the scanning element (20) has a plurality of such rectangular division elements (21) within one division period (P) of the measurement division (14),

the centres of the transparent division elements (21) respectively having a specific spacing (a) in measurement direction (X) within a division period (P) of the measurement division (14), and

and the transparent division elements having respectively a defined width ($b_i$) which varies in dependence on the position of the respective transparent division element (21) within the designated division period (P), such that the Fourier coefficients, belonging to the harmonics to be suppressed, of the transmission function are minimised.

2.  Device according to claim 1, **characterised in that** division elements (21) are offset equidistant to one another in measurement direction (X) within a division period (P), their effective width $b_i$, i=1 to N, corresponding to a fraction of a division period (P) and being determined according to a sine or cosine function in dependence on its position within the division period (P) .

3.  Device according to claim 1, **characterised in that** the length (1) of the division elements (21) transversely in relation to measurement direction (X) corresponds to at least the width (B) of a track (S) of a measurement division (14).

4.  Device according to claim 1, **characterised in that** the centres of the division elements (21) are at the same spacing (a) to one another.

5.  Device according to claim 1, **characterised in that** a plurality of scanning elements (2) are arranged the one behind the other in measurement direction (x).

6.  Device according to claim 1, **characterised in that** the distribution of the widths ($b_i$) of the division elements (21) is selected according to the correlation

$$b_i = a*\sin (i*(180°/N)-(90°/N)$$

with

$$a = (P/(2*N))$$

and wherein

P    refers to the division period,
N    to the number of division elements,
a    to the mutual distance between the centres of the division elements,
b    to the width of the division elements and
$b_i$    to the local width of the division elements with i=1 to N.

**Revendications**

1.  Dispositif pour l'obtention de signaux par palpage d'une division de mesure (14) périodique à l'aide d'une division de palpage (18) qui présente une fonction de transmission, grâce à laquelle un effet de filtre qui est déterminé par les harmoniques à éliminer est obtenu pour les signaux de palpage, le dispositif présentant les caractéristiques suivantes:

    -   une source de lumière (15),
    -   une règle (10) avec une division de mesure (14) qui présente une période de division (P) donnée,
    -   au moins un élément de palpage (20) pour palper une période de division (P) de la division de mesure, qui présente au moins une piste formée de plusieurs éléments de division (21) de forme rectangulaire, transparents, séparés les uns des autres par des zones opaques,
    -   une cellule photoélectrique (19),

caractérisé par le fait que l'élément de palpage (20), à l'intérieur d'une période de division (P), présente plusieurs éléments de division (21) rectangulaires de ce type,

les milieux des éléments de division (21) transparents présentant une distance (a) déterminée dans la direction de mesure (X), à l'intérieur d'une période de division (P) de la division de mesure (14), et
les éléments de division transparents présentant chacun une largeur ($b_i$) définie, qui varie en fonction de la position de l'élément de division (21) transparent concerné à l'intérieur de la période de division (P) mentionnée,

de telle sorte que les coefficients de Fourier de la fonction de transmission appartenant aux harmoniques à supprimer sont minimisés.

2. Dispositif selon la revendication 1, caractérisé par le fait que des éléments de division (21), dans la direction de mesure (X), à l'intérieur d'une période de division (P) sont décalés de manière équidistantes les uns par rapport aux autres, leur largeur $b_i$ active, i=1 à N, correspondant à une fraction d'une période de division (P) et étant déterminée en fonction de leur position à l'intérieur de la période de division (P), suivant une fonction sinus ou une fonction cosinus.

3. Dispositif selon la revendication 1, caractérisé par le fait que la longueur (1) des éléments de division (21), transversalement à la direction de mesure (X), correspond au moins à la largeur (B) d'une piste (S) de la division de mesure (14).

4. Dispositif selon la revendication 1, caractérisé par le fait que les milieux des éléments de division (21) sont disposés à la même distance (a) les uns des autres.

5. Dispositif selon la revendication 1, caractérisé par le fait que plusieurs éléments de division (21) sont disposés les uns à la suite des autres dans la direction de mesure (X).

6. Dispositif selon la revendication 1, caractérisé par le fait que la distribution des largeurs ($b_i$) des éléments de division (21) est choisie conformément à la relation

$$b_i = a * \sin (i * (180°/N) - (90°/N))$$

avec

$$a = P/ (2 * N))$$

et avec

P, la période de division,
N, le nombre d'éléments de division,
a, l'entraxe réciproque des éléments de division,
b, la largeur des éléments de division et
$b_i$, la largeur locale des éléments de division avec i=1 à N.

FIG. 1

FIG. 2

FIG. 3

FIG. 4

EP 0 750 179 B1